(19) Europäisches Patentamt
European Patent Office
Office européen des brevets

(11) EP 3 075 445 B1

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(21) Anmeldenummer: **16001042.7**

(22) Anmeldetag: **03.04.2014**

(51) Int Cl.:
*B01J 8/38* (2006.01)          *B01J 8/44* (2006.01)
*F26B 3/08* (2006.01)          *F26B 15/04* (2006.01)
*B01J 2/16* (2006.01)

(54) **VERFAHREN ZUR BEHANDLUNG VON FESTSTOFFPARTIKELN**

METHOD FOR THE TREATMENT OF SOLID PARTICLES

PROCÉDÉ DE TRAITEMENT DE PARTICULES SOLIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2013 DE 102013005920**

(43) Veröffentlichungstag der Anmeldung:
**05.10.2016 Patentblatt 2016/40**

(62) Dokumentnummer(n) der früheren Anmeldung(en) nach Art. 76 EPÜ:
**14728814.6 / 2 981 352**

(73) Patentinhaber: **Glatt Ingenieurtechnik GmbH**
**99427 Weimar (DE)**

(72) Erfinder:
• **Jacob, Michael**
**99425 Weimar (DE)**

• **Böber, Reinhard**
**99425 Weimar (DE)**
• **Pila, Raoul**
**79415 Bad Bellingen (DE)**
• **Pritzke, Heinz**
**01737 Braunsdorf (DE)**

(74) Vertreter: **Patentanwälte Magenbauer & Kollegen Partnerschaft mbB**
**Plochinger Straße 109**
**73730 Esslingen (DE)**

(56) Entgegenhaltungen:
AT-B- 331 189          DE-B- 1 227 840
JP-A- H0 829 057          US-A- 4 096 792
US-A- 4 511 093          US-A- 5 648 118

**Beschreibung**

Die Erfindung geht aus von einem Verfahren zur Behandlung von Feststoffpartikeln mit einem Rotationstrocknerstern zur Segmentierung einer Wirbelkammer in Prozessräume nach der Gattung des Anspruchs 1.

Kontinuierlich betriebene Fluidisierungsapparate zur Konditionierung von Feststoffpartikeln mit einem sich um die vertikale Mittelachse drehenden Rotationstrocknerstern in einer Wirbelkammer, die dadurch in Prozessräume gegliedert ist, sind seit langem Stand der Technik. Insbesondere wird durch den sich um die vertikale Mittelachse drehenden Rotationstrocknerstern in der Wirbelkammer eine konstante und exakt definierte Verweilzeit der Feststoffpartikel im Fluidisierungsapparat erzielt.

Die US 5,648,118 A betrifft die Beschichtung von teilchenförmigen Materialien, insbesondere ein Verfahren und eine dazugehörige Vorrichtung zum Beschichten von teilchenförmigen Materialien, zum Beispiel eines teilchenförmigen wasserlöslichen Düngemittels oder pharmazeutischen Materials, wodurch es eine verlängerte und kontrollierte Freisetzung erhält Bewertung.

JP H08 29057 A offenbart einen runden Fluidisierungsapparat mit einer in Prozesskammern unterteilten Wirbelkammer zum Herstellen von teilchenförmigem Material.

In der US 4,511,093 A wird ein kombinierter Mischer, Granulierer und Trockner, der alle Einzelprozesse des Mischens (Dispergierens), Granulierens und Trocknens von Pulvern bei verschiedensten Arzneimitteln, Nahrungsmitteln und Chemikalien usw. in einem einzigen Apparat durchführen kann, gezeigt.

AT 331 189 zeigt ein Verfahren zum Trocknen von losem Fasermaterial, insbesondere von losen Kunststofffasern, wobei das zu trocknende Material nacheinander in einer Anzahl hintereinander angeordneter Trocknungsstufen durch Durchleiten eines erhitzten Trocknungsgasstromes von unten aufgewirbelt und der Trocknungsgasstrom beim Weiterführen des zuzuordnenden Materials in die nächste Trocknungsstufe unterbrochen wird, und eine Vorrichtung zur Durchführung des Verfahrens.

Die DE 1 227 840 A betrifft einen kontinuierlich arbeitenden Wirbelbett-Trockner für dieselfähige Güter mit schachartigen Trocknungsraum über einem von gasförmigem Trocknungsmittel durchströmten Siebboden mit darüber um die Schachtachse umlaufenden, bis an den Schachtmantel über dessen Höhe reichenden Radialwänden.

In der US 4,096,792 A wird eine Kaffeeröstvorrichtung dargestellt, die einen grüne Kaffeebohnen röstenden ersten Reaktor und einen die Röste festsetzenden und die Kaffeebohnen kühlenden zweiten Reaktor aufweist, wobei die beiden Reaktoren als Wirbelschichtapparate ausgebildet sind.

Die Patentschrift DE-PS 1 227 840 B stellt einen kontinuierlich arbeitenden Wirbelbett-Trockner für rieselfähige Güter vor. Dieser Wirbelbett-Trockner besteht aus einem schachtartigen Trocknungsraum, einem von gasförmigem Trocknungsmittel durchströmten Siebboden und im Trocknungsraum über dem Siebboden um die Schachtachse umlaufenden, mit bis an den Schachtmantel über dessen Höhe reichenden Radialwänden. Der sich aufwärts erweiternde Schachtmantel übergreift jeweils abdichtend oben eine feststehende, an den Schacht angeschlossene Filter- und Beschickungskammer und unterhalb des Siebbodens eine Luftkammer. Die Radialwände sind hierbei mit dem Schachtmantel fest verbunden. Nachteilig an der in dieser Patentschrift offenbarten technischen Lösung ist, dass nicht vollständig fluidisierte Feststoffpartikel auf den Siebboden absinken bzw. fallen und die um eine Schachtachse umlaufenden Radialwände die Feststoffpartikel dort zerstören können, was zu einer niedrigeren Produktausbeute führt.

In der Patentschrift AT 252874 B wird eine Wirbelschicht-Einrichtung zur stetigen Durchführung chemischer Reaktionen und/oder physikalisch-chemischer Operationen mit zeitlich regulierbarem Durchgang des zu verarbeitenden Eduktes beschrieben. Hierzu enthält jede einzelne Abteilung des Wirbelschichtraumes bzw. der Reaktionskammer eine horizontale, mit Armen und Öffnungen versehene Hohlwelle, wobei unterhalb des Reaktions- bzw. Wirbelschichtraumes eine Kammer zur Verteilung des eintretenden Mediums angeordnet ist, die aus mehreren Abteilungen bzw. Segmenten besteht, von denen jede einzelne Abteilung bzw. jedes einzelne Segment mit einer Gaszuleitung versehen ist, in der eine Vorrichtung zur Regulierung und/oder Unterbrechung der Zufuhr des Reaktionsmediums, ggf. des gewirbelten Mediums vorgesehen ist. Hierbei ist ebenfalls als nachteilig zu bewerten, dass nicht vollständig fluidisierte Feststoffpartikel auf den Siebboden zwischen Wirbelschichtraum und Verteilerkammer absinken bzw. fallen und die um eine Schachtachse umlaufenden Radialwände die Feststoffpartikel zerstören können.

**Die Erfindung und ihre Vorteile**

Das erfindungsgemäße Verfahren zur Behandlung von Feststoffpartikeln zum Zwecke der Agglomeration, des Coating, des Layering, der Sprühgranulation oder der Pelletierung in einem Fluidisierungsapparat, in dem die Feststoffpartikeln bei Einstellung eines bestimmten Verweilzeitspektrums, besprüht werden, wobei der Fluidisierungsapparat einen Rotationstrocknerstern aufweist, welcher zur Segmentierung einer Wirbelkammer in Prozessräume, in dem Fluidisierungsapparat eingebaut ist, wobei die über einer Verteilerkammer angeordnete Wirbelkammer aus einem Außenmantel besteht, welche eine Feststoffpartikel-Eintrittseinheit und eine Feststoffpartikel-Austrittseinheit aufweist, wobei der Rotationstrocknerstern drehbar angeordnet ist und Trennwände zur Förderung von Feststoffpartikeln entlang einer Förderstrecke aufweist, und unterhalb des Rotationstrocknersterns ein Anströmboden lösbar und mitdrehbarer an diesem angeordnet ist, wobei eine Abdeckung oberhalb des Rotationstrocknersterns angeordnet ist, und wobei die Trennwände sich über die komplette Bauhöhe der Wirbelkammer erstrecken; und das Verfahren das kontinuierliche Zuführen von Feststoffpartikeln über die Feststoffpartikel-Eintrittseinheit, das Einbringen einer Flüssigkeit über Düsen zur Behandlung der eingebrachten Feststoffpartikel in den Prozessräumen, in welchen die Feststoffpartikel mit einer exakt definierten Verweilzeit durch die Wirbelkammer transportiert werden und wobei die Verweilzeit der Feststoffpartikel direkt über die Drehzahl des Rotationstrocknersterns definiert ist, sodass das Verweilzeitspektrum als Verhältnis der Verweilzeit der Feststoffpartikeln mit 10 %iger Summenverteilung $t_{RTD,10}$ und der Verweilzeit der Feststoffpartikel mit 90 %iger Summenverteilung $t_{RTD,90}$ im Fluidisierungsapparat im Fluidisierungsapparat mit $t_{RTD,10}/t_{RTD,90} \leq 3$ eingestellt ist, umfasst. Ein Vorteil des Verfahrens mit einem solchen engen Verweilzeitspektrum ist, dass die Produktqualität deutlich im Vergleich zu Verfahren mit größeren Verhältnissen der Verweilzeitspektren gesteigert wird. Mit Verfahren, die zum Beispiel in Apparaten herkömmlicher Bauform ablaufen, können solch enge Verweilzeitspektrum nicht erzielt werden kann. Coating-Prozesse werden in der Pharmaindustrie üblicherweise in Chargenapparaten durchgeführt, um genau definierte Beschichtungszeiten und somit Schichtaufbauten zu gewährleisten. Kontinuierliches Coating in klassischen Wirbelschichtrinnen ist nicht für das Mehrschicht-Coating geeignet, da auch trotz des Einsatzes von Wehreinbauten kein ausreichend enges Verweilzeitspektrum erreicht werden kann. Allerdings ist dieses enge Verweilzeitspektrum zwingend notwendig, wenn insbesondere dünne Schichten auf die Feststoffpartikel aufgetragen werden müssen oder eine sehr gleichmäßige Bedeckung der Feststoffpartikel gefordert wird, unabhängig davon, ob die Behandlung ein- oder mehrschichtig erfolgt. Ein Spektrum, wie beispielsweise

$$t_{RTD,90} \quad = \quad 2 \quad t_{RTD,10}$$

mit

$t_{RTD,...}$    Verweilzeit des Feststoffpartikels (10%- bzw. 90%-Wert der Summenverteilung)

ist in Apparaten mit konventionellen Bauformen nicht möglich. Im Idealfall lassen sich in Apparaten mit konventionellen Bauformen Verweilzeitspektren erzeugen, die äquivalent zu einer Stufenzahl von 5 bis 15 einer theoretischen Rührkesselkaskade sind. Ein Verweilzeitspektrum, wie oben vorgegeben, lässt sich somit mit Apparaten in konventioneller Bauform nicht erreichen.

Das Verweilzeitspektrum kann in einem kontinuierlichen Apparat nicht durch Optimierung des Strömungsprofiles unabhängig von den verfahrenstechnischen Parametern eingestellt werden. Hier gibt es immer Abhängigkeiten, beispielsweise vom Durchsatz, von der Fluidisierungsgeschwindigkeit, von der Schichtmasse sowie von der Partikelgröße und -dichte.

Eine direkt einstellbare Verweilzeit kann nur durch Zwangsführung und Ausschluss von Querströmungen gewährleistet werden. Das neuartige Konzept bietet die Möglichkeit, die Verweilzeit unabhängig von sämtlichen verfahrenstechnischen und stofflichen Kenngrößen vorzugeben. Hier kann nun die Verweilzeit direkt über die Drehzahl definiert werden und dadurch die genaue Aufenthalts- und Prozesszeit beschrieben werden. Eine Rückverfolgbarkeit für den Prozessverlauf ist dadurch optimal gegeben, was für Trocknung, Coating, Agglomeration und Sprühgranulation gefordert ist.

Der Rotationstrocknerstern zur Segmentierung einer Wirbelkammer in Prozessräume hat den Vorteil, dass unterhalb des Rotationstrocknersterns ein Anströmboden lösbar an diesem angeordnet ist. Hierzu ist in der Wirbelkammer der Rotationstrocknerstern drehbar angeordnet und weist zur Förderung von Feststoffpartikeln entlang einer Förderstrecke Trennwände oder dgl. auf. Durch das lösbare Anordnen eines Anströmbodens, der beispielsweise als Gitterrost ausgebildet sein kann, unterhalb des Rotationstrocknersterns werden die Nachteile aus dem Stand der Technik überwunden. Noch nicht vollständig fluidisierte Feststoffpartikel können auf den Siebboden absinken oder fallen und werden dort nicht zerstört, sondern werden weiter durch ein Fluidisierungsmedium, wie beispielsweise Luft oder ein Inertgas, angeströmt und konditioniert. Darüber hinaus ist durch das lösbare Anordnen ein Austausch jederzeit möglich, so dass eine Anpassung des Anströmbodens an die Gegebenheiten des Konditionierungsprozesses möglich ist. Die Vorrichtung eignet sich zudem zur Durchführung von jeglichen Granulations- und Coatingprozessen.

Nach einer vorteilhaften Ausgestaltung des Rotationstrocknersterns ist die Größe der Öffnungen des Anströmbodens von den zu konditionierenden Feststoffpartikeln abhängig. Die Öffnungen des Anströmbodens werden an die jeweiligen Konditionierungsbedingungen angepasst. So wird vermieden, dass bei unterschiedlichen Prozessen Edukte während des Prozessverlaufes zerstört werden.

Nach einer diesbezüglichen vorteilhaften Ausgestaltung des Rotationstrocknersterns weisen die Öffnungen eine Größe auf, die von den kleinsten im Konditionierungsprozess auftretenden Feststoffpartikeln abhängig ist.

Nach einer zusätzlichen vorteilhaften Ausgestaltung des Rotationstrocknersterns ist an dem Rotationstrocknerstern mindestens eine Düse oder dgl. angeordnet. Durch die Anordnung einer Düse an den Rotationstrocknerstern ist die Möglichkeit gegeben, Feststoffpartikel während der Verweilzeit in der Wirbelkammer in verschiedenster Art und Weise zu konditionieren. Es können bspw. Flüssigkeiten aufgesprüht oder unterschiedliche Gase zugemischt werden um die Feststoffpartikel zu verändern bzw. zu konditionieren. Darüber hinaus können mittels Feststoffdüsen bspw. auch Kunststoffe auf die Feststoffpartikel aufgesprüht werden. Die lokale Anordnung der Düsen kann in der Außenwand der Wirbelkammer oder am Rotationstrocknerstern erfolgen. Essenziell wichtig ist bei allen Prozessvarianten, dass eine Flüssigkeit über die Düsen, z. B. Sprühdüsen, in die Prozessräume eingebracht wird. Das Medium, beispielsweise eine Flüssigkeit, kann als Lösung, Suspension, Dispersion, Emulsion, Schmelze usw. mittels der Düse eingebracht werden. In jedem Fall wird kontinuierlich mindestens ein Feststoff über die beliebig gestaltete Feststoffpartikel-Eintrittseinheit zugeführt. Die sich in den einzelnen Prozessräumen befindlichen Feststoffe werden nun mittels mindestens einer Düse mit Medien, z. B. Flüssigkeiten, benetzt. Je nach den vorliegenden Prozessbedingungen und Produkteigenschaften des Feststoffes sowie des Mediums werden die fluidisierten Partikel benetzt. Simultan findet ein Verfestigungsprozess in den Prozessräumen statt, wodurch die Feststoffe entweder miteinander verbunden werden (Agglomerationsprozess) oder sich die über die Sprühflüssigkeit(en) zugeführten Feststoffe an der Partikeloberfläche anlagern (Coating, Layering, Sprühgranulation, Pelletierung). Über die Sprühflüssigkeit zugeführte Lösungsmittel, wie Wasser oder org. Lösungsmittel (Ethanol, Isopropanol oder dgl.), verdampfen und werden mit dem Fluidisierungsmittel (Luft, Stickstoff oder dgl.) abgeführt.

Auf diese Weise lassen sich eine Vielzahl von Prozessvarianten zur Herstellung oder Funktionalisierung von Partikelsystemen durchführen. Beispielsweise kann ein durch Kristallisation hergestellter pulvriger (feindisperser) pharmazeutischer Wirkstoff (z. B. Paracetamol) kontinuierlich zugeführt und in den Prozessräumen mit einem wässrigen Bindemittel (z. B. Stärkekleister) besprüht werden. Diese Binderzuführung führt zu einer Agglomeration der Pulver und es entstehen direkt frei fließfähige Agglomerate mit definierter Struktur. Die Vorrichtung gewährleistet einen genau definierten Bindemittelgehalt im Endprodukt. Außerdem ist auch eine sehr gleichmäßige und reproduzierbare Einstellung der Endfeuchte möglich, weil es im Vergleich zu konventionell gestalteten kontinuierlichen Granulatoren keine Inhomogenität durch Verweilzeitspektren gibt.

Eine andere Anwendungsvariante ist beispielsweise das kontinuierliche Coating. Hier kann z. B. ein vorgranulierter, tablettierter oder pelletierter Rohstoff (Granulate, Agglomerate, Pellets, Tabletten oder dgl.) mit einem Überzug versehen werden. Als Beispiele seien hier die Beschichtung von Düngemittelgranulaten oder Waschmittelkomponenten mit Barrieren gegen Feuchtigkeit (Hydrophobierung), der Überzug von Trägerpellets mit pharmazeutischen Wirkstoffen (drug-layering), das funktionelle Coating von pharmazeutischen Wirkstoffen mit z. B. Polymeren zur Änderung des Freisetzungsprofiles (SR-Coating) oder die Beschichtung von Enzymgranulaten mit Additiven zur Verbesserung der Lager- und Pelletierstabilität genannt.

In allen Anwendungsfällen erlaubt die Vorrichtung, dass Einbringen von Medien, beispielsweise Flüssigkeiten, jeglicher Form sowie unter Anwendung sämtlicher bekannter Sprüheinrichtungen (z. B. Druck-, Zweistoff-, Ultraschalldüsen oder dgl.) unabhängig von deren räumlicher Orientierung und Anordnung (Eindüsung von oben, unten, geneigt, tangential oder ähnlichem). Auch die Anzahl der Sprüheinrichtungen ist variabel. Beispielsweise ist es denkbar, verschiedene Flüssigkeiten simultan über mehrere Düsen in jeweils einem Prozessraum einzutragen oder aber auch Mehrstoffdüsen (paralleles Versprühen von Flüssigkeiten) zu nutzen.

Apparatetechnisch ist es auch möglich, dass ein Prozessraum während seiner Bewegung von der Feststoffpartikel-Eintrittseinheit zur Feststoffpartikel-Austrittseinheit nacheinander mit mehreren Flüssigkeiten versorgt wird. Somit ist auch ein genau kontrollierter und gesteuerter Aufbau von z. B. Mehrschichtpellets möglich. Dazu werden die Düsen einfach umschaltbar an mehrere Versorgungssysteme angeschlossen.

Nach einer zusätzlichen vorteilhaften Ausgestaltung des Rotationstrocknersterns sind die zur Förderung von Feststoffpartikeln entlang einer Förderstrecke dienenden Trennwände mit einem Außenmantel der Wirbelkammer fest verbunden.

Nach einer zusätzlichen vorteilhaften Ausgestaltung des Rotationstrocknersterns weist mindestens ein Prozessraum eine Abdeckung und/oder mindestens einen Filter auf. Durch die Anordnung einer Abdeckung oberhalb des Rotationstrocknersterns wird ein Prozessraumabschluss nach oben hin gebildet. So wird ein Überlaufen von fluidisierten Feststoffpartikeln von einem Prozessraum in einen anderen Prozessraum während des Betriebs des Fluidisierungsapparates verhindert, wodurch die Produktqualität gesteigert wird, da somit eine Rückvermischung von unterschiedlich konditionierten Feststoffpartikeln zwischen den einzelnen Prozessräumen unterbunden wird.

Nach einer diesbezüglich vorteilhaften Ausgestaltung des Rotationstrocknersterns ist der mindestens eine Filter an der mindestens einen Abdeckung angeordnet. Die Anordnung eines Filters in der Abdeckung des Prozessraums hat den Vorteil, dass der Filter verhindert, dass fluidisierte Feststoffpartikel aus dem jeweiligen Prozessraum ausgetragen werden und dadurch in andere Segmente gelangen können. Weiterhin werden dadurch Entmischungseffekte oder Separierungen innerhalb der segmentierten Prozessräume unterbunden.

Nach einer zusätzlichen vorteilhaften Ausgestaltung des Rotationstrocknersterns weist mindestens ein Prozessraum eine Prozessgasregelung auf. Diese ist vorteilhafterweise oberhalb des Rotationstrocknersterns und einer ersten Abdeckung angeordnet, mit der der Prozessgasstrom in jedem Prozessraum einzeln reguliert werden kann. Die Prozessgasregelung besteht zum einen aus einem zusätzlichen Stern (Filterräume) zur Segmentierung des durch die Prozessräume und aus der Abdeckung strömenden Prozessgases. Oberhalb dieses sternförmigen Bauteils befindet sich zum anderen vorteilhaft für jeden Prozessraum jeweils eine Regelklappe oder dgl. zur Regelung des Prozessgasstroms. Vorteilhaft kann auf diese Weise die Prozessgasströmung durch jeden Prozessraum einzeln parametriert werden bzw. ggf. zusätzlich oder alternativ zur Luftmengenverteilung durch die Anströmbodenkonstruktion. Dies stellt eine Verbesserung des momentanen Standes der Technik dar, da bei einer Konditionierung mittels der in jedem Prozessraum angeordneten Düsen während einer Rotation es unterschiedlicher Prozessgasströmungen bedarf. Außerdem kann sich eine Regelung der Prozessgasströmung insbesondere bei den Befüll- und Entleervorgängen der jeweiligen Prozessräume günstig auswirken.

Weitere Vorteile und vorteilhafte Ausgestaltung der Erfindung sind der nachfolgenden Beschreibung, den Ansprüchen und den Zeichnungen entnehmbar.

## Zeichnung

Bevorzugte Ausführungsbeispiele des erfindungsgemäßen Verfahrens sind in der Zeichnung dargestellt und werden im Folgenden näher erläutert. Es zeigen

Fig. 1     eine perspektivische Darstellung eines Fluidisierungsapparates mit dem eingebauten Rotationstrocknerstern,

Fig. 2     eine perspektivische Darstellung auf einen Fluidisierungsapparat mit dem eingebauten Rotationstrocknerstern,

Fig. 3     eine aufgeschnittene, perspektivische Darstellung eines Fluidisierungsapparates mit dem eingebauten Rotationstrocknerstern,

Fig. 4     eine perspektivische Ansicht des Rotationstrocknersterns,

Fig. 5     eine Aufsicht auf den Rotationstrocknerstern,

Fig. 6     eine perspektivische Darstellung eines Zusammenbaus des Rotationstrocknersterns und eines Einbauteils der Verteilerkammer,

Fig. 7     eine Aufsicht auf den in Fig. 6 dargestellten Zusammenbau,

Fig. 8     eine perspektivische Darstellung des Rotationstrocknersterns mit Abdeckung, Filtern und Prozessgasregelung und

Fig. 9     einen Querschnitt verschiedener Ausführungsformen der Luftzuführung von Fluidisierungsapparaten.

## Beschreibung der Ausführungsbeispiele

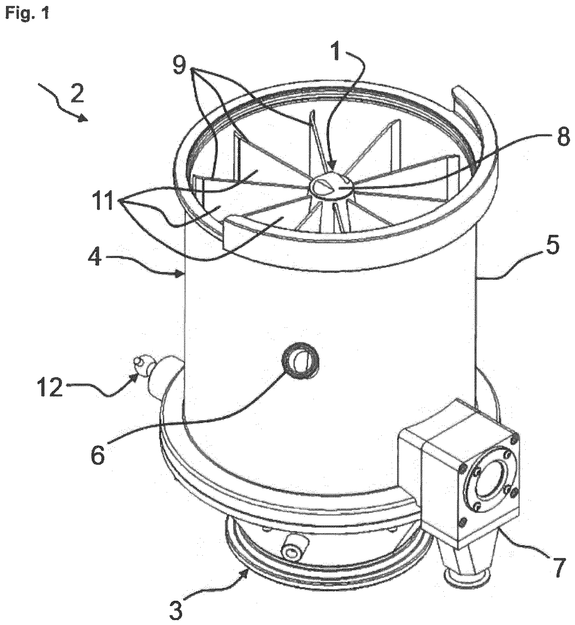

In Fig. 1 wird ein Ausführungsbeispiel des Rotationstrocknersterns 1 in einer perspektivischen Darstellung, eingebaut in einen Fluidisierungsapparat 2, gezeigt. Die über der Verteilerkammer 3 angeordnete Wirbelkammer 4 besteht aus einem Außenmantel 5, welcher eine Feststoffpartikel-Eintrittseinheit 6 und eine Feststoffpartikel-Austrittseinheit 7 aufweist, und dem sich in der Wirbelkammer 4 drehenden Rotationstrocknerstern 1, der einen Kegel 8 sowie daran angeordnete Trennwände 9 aufweist, die beispielsweise aus Blech, Aluminium oder dgl. gefertigt sind, und die Wirbelkammer 4 in Segmente unterteilen. Die Trennwände 9 erstrecken sich über die komplette Bauhöhe der Wirbelkammer 4. Die Trennwände 9, der Außenmantel 5, der nicht dargestellte Anströmboden 10, beispielsweise ein Gitterrost, des Rotationstrocknersterns 1 sowie eine nicht dargestellte Abdeckung der Wirbelkammer 4 formen Prozessräume 11. Eine Drehung des Rotationstrocknersterns 1, wodurch eine exakt definierte Verweilzeit der Feststoffpartikel in der Wirbelkammer 4 eingestellt wird, wird durch eine Antriebseinheit 12, beispielsweise einen Servomotor oder dgl., erzeugt.

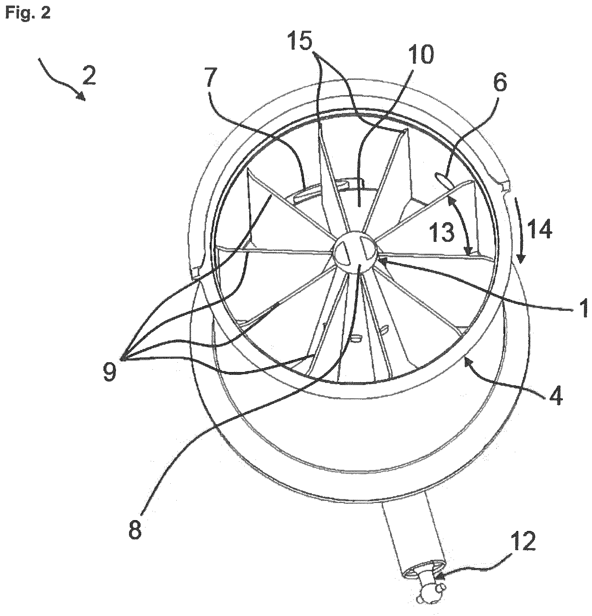

Eine perspektivische Darstellung auf den Fluidisierungsapparat 2, in welchem der Rotationstrocknerstern 1 eingebaut ist, ist in der Fig. 2 dargestellt. Die Darstellung zeigt die in Fig. 1 bereits benannten technischen Merkmale des Rotationstrocknersterns 1, sowie den in Fig. 1 nicht gezeigten Anströmboden 10. Darüber hinaus wird ein Öffnungswinkel 13 der Prozessräume 11, die sich durch die am Kegel 8 des Rotationstrocknersterns 1 angeordneten Trennwände 9, den Anströmboden 10, den Außenmantel 5 und die nicht gezeigte Abdeckung ergeben, gezeigt, der maßgeblich durch die Positionen der Feststoffpartikel-Eintrittseinheit 6 und der Feststoffpartikel-Austrittseinheit 7 zueinander bestimmt wird. Durch den lösbar am Rotationstrocknerstern 1 angeordneten Anströmboden 10 wird eine Entkopplung der beiden Einheiten, Verteilerkammer 3 und Wirbelkammer 4 erreicht. Der von der nicht dargestellten Abdeckung in Richtung des Anströmbodens 10 im Durchmesser anwachsende Kegel 8 des Rotationstrocknersterns 1 dient der Strömungsberuhigung und somit zu einer Ausbildung einer stabileren Wirbelschicht innerhalb der Wirbelkammer 4. Die am Rotationstrocknerstern 1 angeordneten Trennwände 9 erstrecken sich über die gesamte Höhe der Wirbelkammer 4 und sind damit so hoch, dass ein Überlauf der fluidisierten Feststoffpartikel während des Betriebs des Fluidisierungsapparates 2 nicht möglich ist. Diese Eigenschaft der Trennwände 9 steigert die Produktqualität, da somit eine Rückvermischung von unterschiedlich konditionierten Feststoffpartikeln zwischen den einzelnen Prozessräumen 11 unterbunden wird. Des Weiteren weisen die Trennwände 9 im Ausführungsbeispiel am äußeren Ende einen in Drehrichtung 14 gebogenen bzw. gewinkelten Trennwandabschluss 15 auf, wodurch zum einen eine zusätzliche mechanische Stabilität der Trennwände 9 des Rotationstrocknersterns 1 erreicht wird und zum anderen eine Abdichtung der Prozessräume 11 gegen den Außenmantel 5 erfolgt. Zugleich werden durch den in Drehrichtung 14 gebogenen Trennwandabschluss 15 an der Innenwandung des Außenmantels 5 anhaftende Feststoffpartikel abgeschabt und so ein Verschmutzen der Innenwandung des Außenmantels 5 verhindert. Der Trennwandabschluss 15 zwischen Trennwand 9 und Außenmantel 5 der Wirbelkammer 4 kann auch durch eine andersartig geeignete Dichtung erzeugt werden. Neben der Möglichkeit, einen rotierenden Rotationstrocknerstern 1 zu nutzen, besteht auch die Möglichkeit den Außenmantel 5, fest mit den Trennwänden 9 des Rotationstrocknersterns 1 zu verbinden und so die komplette Wirbelkammer 4 drehbar auszuführen.

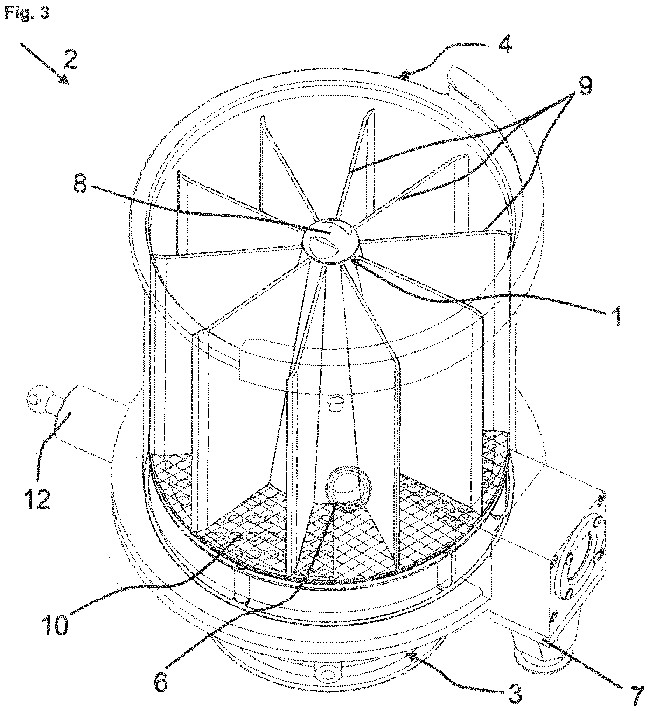

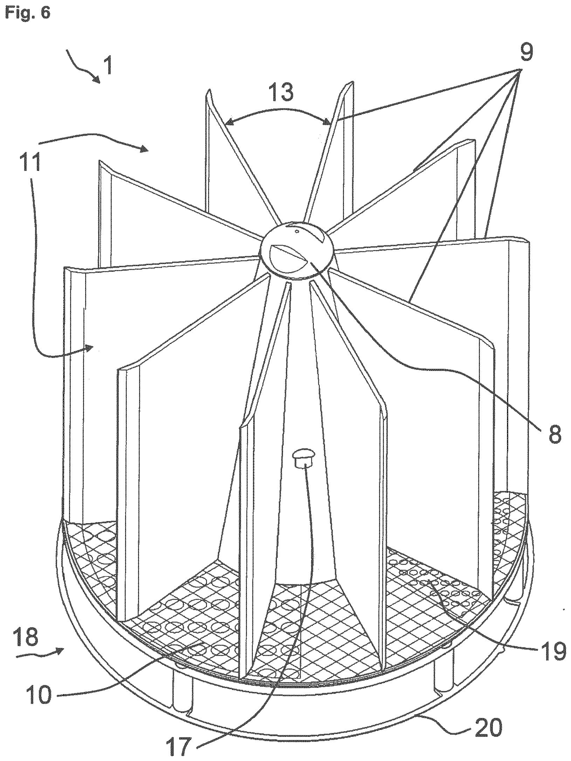

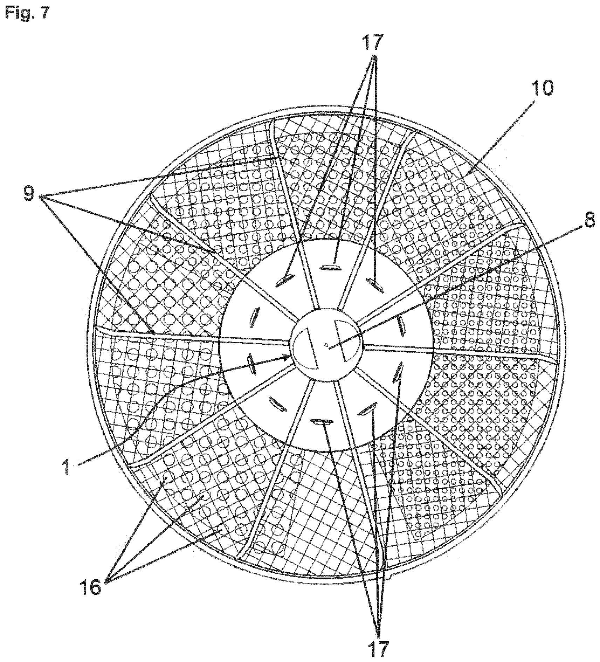

Fig. 3 zeigt eine aufgeschnittene, perspektivische Darstellung des Fluidisierungsapparates 2 und des darin eingebauten Rotationstrocknersterns 1. Neben den in den zuvor beschriebenen Figuren 1 und 2 dargestellten technischen Merkmalen ist in der Fig. 3 der Anströmboden 10, beispielsweise ein Gitterrost oder dgl., des Rotationstrocknersterns 1 im zusammengebauten Zustand der beiden Funktionseinheiten, Verteilerkammer 3 und Wirbelkammer 4, deutlich sichtbar gezeigt. Der Anströmboden 10, welcher austauschbar und mitdrehbar am Rotationstrocknerstern 1 angeordnet ist, hat ein über seiner Fläche variierendes Öffnungsverhältnis. Dieses ist in Fig. 6 und 7 als einheitliche Struktur dargestellt. Das Öffnungsverhältnis des Anströmbodens 10 ist an die zu konditionierenden Feststoffpartikel anpassbar, durch zum Beispiel unterschiedliche Durchmesser der Öffnungen 16, welche bspw. als Öffnungsbohrungen ausgestaltet sein können, und im Falle eines mitdrehenden Anströmbodens 10 von der kleinsten auftretenden Größe der zu konditionierenden Feststoffpartikel abhängig sind. Durch diese Anpassung des Anströmbodens 10 an die kleinsten zu konditionierenden Feststoffpartikel wird einem Produktverlust während der Verweilzeit der Feststoffpartikel in der Wirbelkammer 4 entgegengewirkt, da diese nicht durch den Anströmboden 10 fallen können. Des Weiteren werden die Feststoffpartikel nicht zerstört, da diese, auf dem Anströmboden liegend, nicht von den Trennwänden 9 erfasst werden können. Der Anströmboden 10, beispielsweise ein Gitterrost oder dgl., bildet darüber hinaus zusätzlich einen Prozessraumabschluss und begrenzt somit die Funktionseinheit Wirbelkammer 4 gegenüber der Funktionseinheit Verteilerkammer 3.

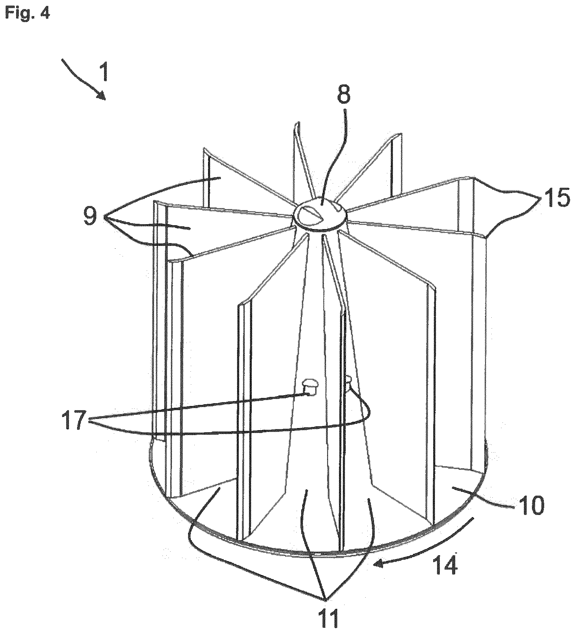

Fig. 4 zeigt eine perspektivische Ansicht des erfindungsgemäßen Rotationstrocknersterns 1. Der im Ausführungsbeispiel dargestellte Rotationstrocknerstern 1 besteht aus dem Kegel 8, den Trennwänden 9 mit in Drehrichtung 14 gebogenen Trennwandabschlüssen 15 und dem lösbar angeordneten Anströmboden 10, beispielsweise ein Gitterrost oder dgl.. Hierdurch werden die Prozessräume 11 geschaffen, in welchen die Feststoffpartikel mit einer exakt definierten Verweilzeit durch die Wirbelkammer 4 transportiert werden. Darüber hinaus sind Düsen 17 im Kegel 8 des Rotationstrocknersterns 1 dargestellt. Die Düsen können jedoch auch an den Trennwänden 9 oder auch der hier nicht gezeigten Außenwand 5 der Wirbelkammer 4 angeordnet sein. Durch die Düsen ist ein Aufsprühen von verschiedenen Medien, wie Gasen, Flüssigkeiten oder Feststoffen, möglich. Als Düsen können alle im Stand der Technik bekannten Düsen verwendet werden.

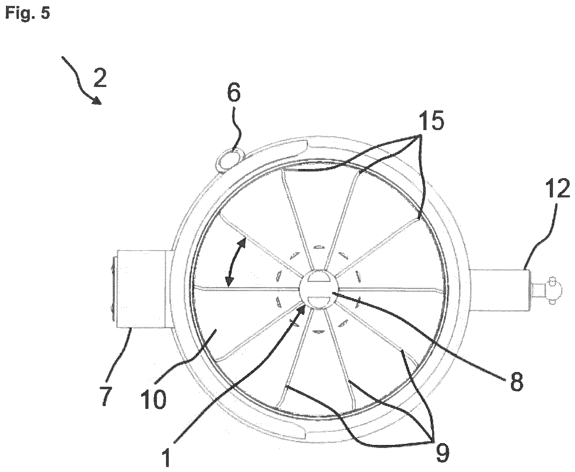

In Fig. 5 wird eine Aufsicht auf den Rotationstrocknerstern 1 dargestellt. Der gezeigte Rotationstrocknerstern 1 weist die in Fig. 4 beschriebenen technischen Merkmale auf und zeigt überdies den die Prozessräume 11 aufspannenden Öffnungswinkel 13. Die Prozessräume 11 besitzen im Ausführungsbeispiel alle den gleichen Öffnungswinkel 13, wodurch die Prozessräume 11 alle gleich groß sind. Die Prozessräume 12 können jedoch auch einen unterschiedlichen Öffnungswinkel 13 aufweisen und sind somit in ihrer Größe nicht mehr identisch. Des Weiteren ist in Fig. 5 der sich nach unten erweiternde Kegel 8 des Rotationstrocknerstern 1 dargestellt, welcher zu einer Strömungsberuhigung der ausgebildeten Wirbelschicht führt.

Eine perspektivische Darstellung des Zusammenbaus des Rotationstrocknersterns 1, mit Kegel 8 und Trennwänden 9, ist in Fig. 6 über einem Einbauteil 18 der Verteilerkammer 3, bestehend aus Luftverteilerplatte 19 und Gestell 20, gezeigt. Das Einbauteil 18 ist in der Verteilerkammer 3 unterhalb des Rotationstrocknersterns 1, welcher in der Wirbelkammer 4 platziert ist, angeordnet. Gut sichtbar sind in der Fig. 6 die gleichmäßigen Öffnungsverhältnisse des Anströmbodens 10, hier als Öffnungen 16, insbesondere als Öffnungsbohrungen, ausgeführt, welche auf die kleinste Ausdehnung der Feststoffpartikel im durchzuführenden Konditionierungsprozess ausgelegt sind und so einen Produktverlust verhindern.

Fig. 7 zeigt eine Aufsicht des in Fig. 6 dargestellten Zusammenbaus des Rotationstrocknersterns 1 und des Einbauteils 18. In Fig. 7 sind nochmals die zuvor beschriebenen technischen Merkmale, wie Trennwände 9, Trennwandabschlüsse 15, Kegel 8 und Düsen 17 gezeigt. Darüber hinaus sind die Öffnungen 16 des Anströmbodens 10 hier in einer konstanten Ausgestaltung als Öffnungsbohrungen gezeigt.

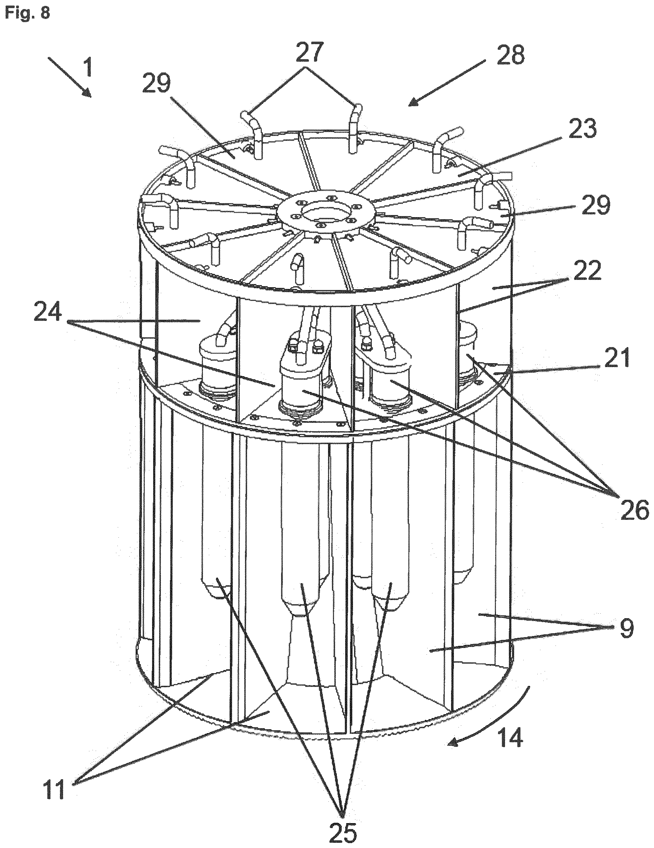

Fig. 8 zeigt eine perspektivische Darstellung des Rotationstrocknersterns 1. Die Prozessräume 11 weisen am oberen Ende der Trennwände 9 eine erste Abdeckung 21 auf, die sich mit dem Rotationstrocknersterns 1 mit dreht. Die Abdeckung 21 wird hier gasdicht mit den Trennwänden 9 verbunden. Aufgrund der Abdeckung 21 entspricht die Höhe der Prozessräume 11 der Höhe der Trennwände 9. So wird zum einen erreicht, dass jeder Prozessraum 11 gegenüber den anderen Prozessräumen 11 abgegrenzt wird und zum anderen, dass das fluidisierte Feststoffpartikel vom Eintritt in den Fluidisierungsapparat 2 durch die Feststoffpartikel-Eintrittseinheit 6 bis hin zum Austritt durch die Feststoffpartikel-Austrittseinheit 7 jeweils nur in einem Prozessraum 11 verweilt, wodurch keine Quervermischungen zwischen den unterschiedlichen Prozessräumen 11 stattfinden. Oberhalb der Abdeckung 21 sind im Ausführungsbeispiel Trennwände 22 eingezogen, die hier bespielhaft dieselbe Anordnung aufweisen, wie die Trennwände des Rotationtrocknerstern 1, d. h. die Trennwände 22 fluchten mit den Trennwänden 9 des Rotationstrocknersterns 1. Ebenso wie die Trennwände 9 der Prozessräume 11 weisen die Trennwände 22 am oberen Ende eine Abdeckung 23 auf. Diese dreht sich ebenfalls mit dem Rotationstrocknersterns 1 mit und ist mit den Trennwänden 22 zumindest teilweise verbunden, wodurch Filterräume 24 entstehen. Im Ausführungsbeispiel weist die Abdeckung 21 pro Prozessraum 11 zwei Öffnungen auf, in denen jeweils ein Filter 25, welcher beispielsweise aus einem Metallfiltergewebe oder einem filtrierenden Stoffgewebe oder dgl. besteht, angeordnet ist, der in den Prozessraum 11 ragt. Die Reinigung der Filter 25 erfolgt über einen getakteten Luftstoß, beispielsweise mittels Druckluft oder dgl., der von einer Filterreinigungsvorrichtung 26 erzeugt wird. Die Filterreinigungsvorrichtung 26 wird über eine Zuleitung 27, mit beispielsweise Druckluft, versorgt. In vorteilhafter Weise sind für jeden Prozessraum 11 mindestens zwei Filter 25 vorgesehen, wodurch erreicht wird, dass ein Filter 25 gereinigt werden kann während das Prozessgas durch den anderen Filter 25 strömt. So kann ein kontinuierlicher Fluidisierungsprozess geschaffen werden, da der Prozessgasstrom und somit die Fluidisierung der Feststoffpartikel für die Reinigung der Filter 25 nicht unterbrochen werden muss. Oberhalb der Abdeckung 23 ist eine Prozessgasregelung 28 dargestellt, die aus jeweils einer Regelklappe 29 oder dgl. für jeden Prozessraum 11 besteht, und die Möglichkeit aufweist, die Regelklappen 29 abhängig oder unabhängig voneinander über eine steuerungstechnische Eingabe einstellen zu können, wodurch ein sicherer und störungsfreier Betrieb des Fluidisierungsapparates 2 gewährleistet wird. Die Regelklappe 29 kann jedoch auch durch ein in die Abdeckung 23 eingesetztes Regelventil ersetzt werden. In einem solchen Fall muss die Abdeckung 23 gasdicht mit den Trennwänden 22 verbunden werden, so dass jeder Filterraum 24 genau einem Prozessraum 11 zugeordnet ist. Die Stellung der Regelklappe 29 respektive des Regelventils bestimmt den Volumenstrom des Fluidisierungsgases (Prozessgas), der den dazugehörigen Prozessraum 11 durchströmt. Auf diese Weise kann die Prozessgasströmung in jedem Prozessraum 11 einzeln eingestellt respektive reguliert werden. Beispielhaft wird beim Eintritt der zu fluidisierenden Feststoffpartikel in einen Prozessraum 11 des Fluidisierungsapparates 2 durch die Feststoffpartikel-Eintrittseinheit 6 eine variierende Prozessgasströmung benötigt. Dagegen wird während der Konditionierung der fluidisierten Feststoffpartikel eine gleichbleibende Prozessgasströmung benötigt.

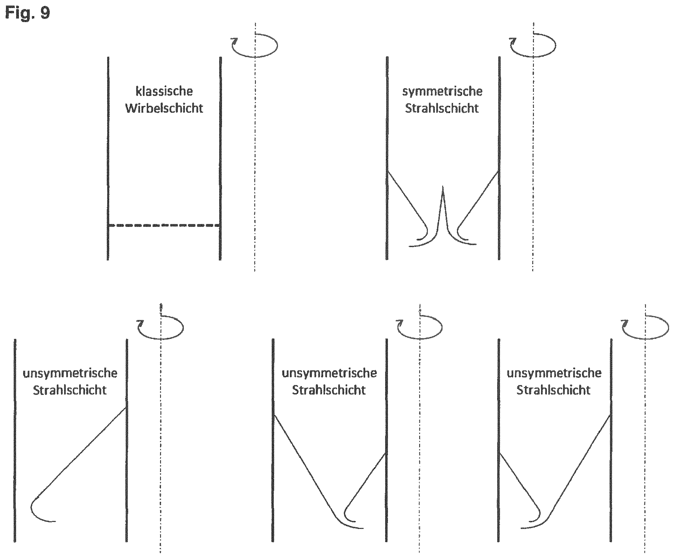

Fig. 9 zeigt verschiedene Ausführungsformen der Luftzuführung von Fluidisierungsapparaten in einem Querschnitt durch den einzelnen Prozessraum eines Fluidisierungsapparates. Im Gegensatz zur klassischen Ausführung der Anströmböden für Wirbelschichtapparate (perforierte, poröse, gelochte, gestanzte, zusammengesinterte Bleche oder dgl.) kann die Luftverteilung anstelle durch einen Anströmboden auch durch Anwendung des Strahlschichtprinzips erfolgen. Hierbei wird das Fluidisierungsmittel durch beliebig gestaltete Eintrittsschlitze, vorzugsweise umlaufende Eintrittsschlitze, in den Prozessraum geführt. Durch die zweckgemäße Gestaltung sind dadurch ein sehr breiter strömungsmechanischer Arbeitsbereich sowie eine gezielte Beeinflussung der Partikelbewegung in den Prozessräumen möglich. Die Lufteintritte können sowohl konstruktiv vorgegeben "fest" als auch variabel und verstellbar ausgeführt werden. Weiterhin kann die Strahlschicht symmetrisch oder unsymmetrisch ausgeführt werden. Die Prozessräume des Fluidisierungsapparates können mit senkrechten Wänden oder auch mit beliebig geneigten Wänden innen oder/und außen konzipiert werden, um z. B. sich nach oben erweiternde Prozessräume zu realisieren. Sowohl als klassische Wirbelschicht als auch als Strahlschicht konzipierte Prozessräume können mit allen möglichen Düsenformen und für sämtliche Prozessvarianten versehen werden. Auch Kombinationen aus Strahl- und Wirbelschichten integriert in einer Wirbelkammer sind denkbar.

Bezugszeichenliste

| 1 | Rotationstrocknerstern |
|----|----|
| 2 | Fluidisierungsapparat |
| 3 | Verteilerkammer |
| 4 | Wirbelkammer |
| 5 | Außenmantel |
| 6 | Feststoffpartikel-Eintrittseinheit |
| 7 | Feststoffpartikel-Austritteinheit |
| 8 | Kegel |
| 9 | Trennwand |
| 10 | Anströmboden |
| 11 | Prozessräume |
| 12 | Antriebseinheit |
| 13 | Öffnungswinkel |
| 14 | Drehrichtung |
| 15 | Trennwandabschluss (Dichtung) |
| 16 | Öffnungen |
| 17 | Düse |
| 18 | Einbauteil |
| 19 | Luftverteilerplatte |
| 20 | Gestell |
| 21 | Abdeckung |
| 22 | Trennwand |
| 23 | Abdeckung |
| 24 | Filterraum |
| 25 | Filter |
| 26 | Filterreinigungsvorrichtung |
| 27 | Zuleitung |

28    Prozessgasregelung
29    Regelklappe

**Patentansprüche**

1.  Verfahren zur Behandlung von Feststoffpartikeln zum Zwecke der Agglomeration, des Coating, des Layering, der Sprühgranulation oder der Pelletierung in einem Fluidisierungsapparat, in dem die Feststoffpartikeln bei Einstellung eines bestimmten Verweilzeitspektrums, besprüht werden, wobei der Fluidisierungsapparat einen Rotationstrocknerstern (1) aufweist, welcher zur Segmentierung einer Wirbelkammer (4) in Prozessräume (11), in dem Fluidisierungsapparat (2) eingebaut ist, wobei die über einer Verteilerkammer (3) angeordnete Wirbelkammer (4) aus einem Außenmantel (5) besteht, welche eine Feststoffpartikel-Eintrittseinheit (6) und eine Feststoffpartikel-Austrittseinheit (7) aufweist,

    - wobei der Rotationstrocknerstern (1) drehbar angeordnet ist und Trennwände (9) zur Förderung von Feststoffpartikeln entlang einer Förderstrecke aufweist, und unterhalb des Rotationstrocknersterns (1) ein Anströmboden (10) lösbar und mitdrehbarer an diesem angeordnet ist, wobei eine Abdeckung oberhalb des Rotationstrocknersterns angeordnet ist, und wobei die Trennwände (9) sich über die komplette Bauhöhe der Wirbelkammer (4) erstrecken; das Verfahren umfasst:

        - kontinuierliches Zuführen von Feststoffpartikeln über die Feststoffpartikel-Eintrittseinheit (6),
        - Einbringen einer Flüssigkeit über Düsen zur Behandlung der eingebrachten Feststoffpartikel in den Prozessräumen (11), in welchen die Feststoffpartikel mit einer exakt definierten Verweilzeit durch die Wirbelkammer (4) transportiert werden und wobei die Verweilzeit der Feststoffpartikel direkt über die Drehzahl des Rotationstrocknersterns (1) definiert ist,
        - sodass das Verweilzeitspektrum als Verhältnis der Verweilzeit der Feststoffpartikeln mit 10 %iger Summenverteilung $t_{RTD,10}$ und der Verweilzeit der Feststoffpartikel mit 90 %iger Summenverteilung $t_{RTD,90}$ im Fluidisierungsapparat (2) im Fluidisierungsapparat mit $t_{RTD,10} / t_{RTD,90} \leq 3$ eingestellt ist.

**Claims**

1.  Method for the treatment of solid particles for the purpose of agglomeration, coating, layering, spray granulation or pelletisation in a fluidisation apparatus, in which the solid particles are sprayed with the setting of a specific dwell time spectrum, wherein the fluidisation apparatus has a rotary dryer star (1) which is installed in the fluidisation apparatus (2) to segment a swirl chamber (4) into process chambers (11), wherein the swirl chamber (4) mounted above a distribution chamber (3) consists of an outer casing (5), which has a solid particle inlet unit (6) and a solid particle outlet unit (7),

    - wherein the rotary dryer star (1) is rotatably mounted and has partition walls (9) for conveyance of the solid particles along a conveyor line, and below the rotary dryer star (1) is provided a diffuser plate (10), rotatable with and releasable from the former, and wherein the partition walls (9) extend over the entire height of the swirl chamber (4); the method comprises:

        - continuous feeding of solid particles via the solid particle inlet unit (6),
        - introduction of a fluid through nozzles for the treatment of the introduced solid particles in the process chambers (11), in which the solid particles are conveyed through the swirl chamber (4) with an exactly defined dwell time, and wherein the dwell time of the solid particles is defined directly via the speed of the rotary dryer star (1),
        - so that the dwell time spectrum is set as the ratio between the dwell time of the solid particles with 10% cumulative distribution $t_{RTD.10}$ and the dwell time of the solid particles with 90% cumulative distribution $t_{RTD.90}$ in the fluidisation apparatus (2) with $t_{RTD.10} / t_{RTD.90} \leq 3$.

**Revendications**

1.  Procédé servant au traitement de particules de matière solide aux fins de l'agglomération, du revêtement, du layering, de la granulation par pulvérisation ou de la pelletisation dans un appareil de fluidification, dans lequel les particules de matière solide sont aspergées lors du réglage d'un intervalle de temps de séjour défini, dans lequel l'appareil de fluidification présente une étoile de séchoir rotatif (1), laquelle est montée dans l'appareil de fluidification (2) aux fins de la segmentation d'une chambre de turbulence (4) en des chambres de traitement (11), dans lequel la chambre de turbulence (4) disposée au-dessus d'une chambre de répartition (3) est constituée d'une enveloppe extérieure (5), laquelle présente une unité d'entrée de particules de matière solide (6) et une unité de sortie de particules de matière solide (7),

- dans lequel l'étoile de séchoir rotatif (1) est disposée de manière à pouvoir tourner et présente des parois de séparation (9) servant à acheminer des particules de matière solide le long d'une voie d'acheminement, et un fond de flux entrant (10) est disposé de manière amovible et de manière entraînable au niveau de l'étoile de séchoir rotatif (1) sous celle-ci, dans lequel un couvrement est disposé au-dessus de l'étoile de séchoir rotatif et dans lequel les parois de séparation (9) s'étendent sur la hauteur de construction totale de la chambre de turbulence (4), le procédé comprend :

    - l'amenée en continu de particules de matière solide par l'intermédiaire de l'unité d'entrée de particules de matière solide (6) ;
    - l'introduction d'un liquide par l'intermédiaire de buses aux fins du traitement des particules de matière solide introduites dans les chambres de traitement (11), dans lesquelles les particules de matière solide sont transportées avec un temps de séjour défini de manière exacte à travers la chambre de turbulence (4) et dans lequel le temps de séjour des particules de matière solide est défini directement par l'intermédiaire de la vitesse de rotation de l'étoile de séchoir rotatif (1),
    - de sorte que l'intervalle de temps de séjour est réglé en tant que rapport entre le temps de séjour des particules de matière solide avec une distribution cumulative de 10 % $t_{RTD,10}$ et le temps de séjour des particules de matière solide avec une distribution cumulative de 90 % $t_{RTD,90}$ dans l'appareil de fluidification (2) avec $t_{RTD,10}/t_{RTD,90} \leq 3$.

Fig. 1

Fig. 2

EP 3 075 445 B1

**Fig. 3**

12

Fig. 4

**Fig. 5**

Fig. 6

**Fig. 7**

Fig. 8

Fig. 9

klassische
Wirbelschicht

symmetrische
Strahlschicht

unsymmetrische
Strahlschicht

unsymmetrische
Strahlschicht

unsymmetrische
Strahlschicht

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5648118 A
- JP H0829057 A
- US 4511093 A
- AT 331189
- DE 1227840 A
- US 4096792 A
- DE PS1227840 B
- AT 252874 B